**Europäisches Patentamt**

**European Patent Office**

**Office européen des brevets**

(19)

(11) Veröffentlichungsnummer: **0 263 380**

**A2**

# (12) EUROPÄISCHE PATENTANMELDUNG

(21) Anmeldenummer: **87114060.4**

(22) Anmeldetag: **25.09.87**

(51) Int. Cl.⁴ **G11B 11/10**

(30) Priorität: **08.10.86 DE 3634333**

(43) Veröffentlichungstag der Anmeldung:
**13.04.88 Patentblatt 88/15**

(84) Benannte Vertragsstaaten:
**AT CH DE FR GB IT LI NL SE**

(71) Anmelder: **Siemens Aktiengesellschaft Berlin und München**
**Wittelsbacherplatz 2**
**D-8000 München 2(DE)**

(72) Erfinder: **Weller, Dieter, Dr.**
**Südliche Stadtmauerstrasse 16**
**D-8520 Erlangen(DE)**
Erfinder: **Schultz, Ludwig, Dr.**
**Amselweg 22**
**D-8526 Bubenreuth(DE)**

(54) **Verfahren zur Herstellung eines magnetooptischen Aufzeichnungsmediums.**

(57) Mit dem Verfahren ist ein magnetooptisches Aufzeichnungsmedium herzustellen, wobei auf wenigstens eine Flachseite eines nicht-magnetischen Substrates (3) eine Speicherschicht aus einem magnetischen amorphen Material aufgebracht wird, das aus mindestens zwei Ausgangskomponenten (A, B) in elementarer Form oder in Form von Verbindungen oder Legierungen gebildet wird und eine senkrecht bezüglich der Flachseite des Substrates (3) ausgerichtete magnetische Vorzugsachse aufweist. Die Speicherschicht soll ein hohes Signal-zu-Rauschverhältnis ermöglichen. Hierzu ist erfindungsgemäß vorgesehen, daß ein Vorprodukt (2) mit sandwichartigem Aufbau aus jeweils benachbarten Schichten (4, 5) aus den eine schnelle (anomale) Diffusionsreaktion zulassenden Ausgangskomponenten (A, B) erstellt wird, wobei eine jeweilige Schichtdicke ($\Delta_i$) zumindest der schnell-diffundierenden Ausgangskomponente (B) zwischen 1 nm und 100 nm vorgesehen wird, und daß anschließend zur Bildung eines amorphen Gefüges die Diffusionsreaktion bei einer vorbestimmten Temperatur unterhalb der Kristallisationstemperatur des amorphen Materials durchgeführt wird.

FIG 1

EP 0 263 380 A2

## Verfahren zur Herstellung eines magnetooptischen Aufzeichnungsmediums

Die Erfindung bezieht sich auf ein Verfahren zur Herstellung eines magnetooptischen Aufzeichnungsmediums, bei welchem auf wenigstens eine Flachseite eines nicht-magnetischen Substrates eine Speicherschicht aus einem magnetischen amorphen Material aufgebracht wird, das aus mindestens zwei Ausgangskomponenten in elementarer Form oder in Form von Verbindungen oder Legierungen gebildet wird und eine senkrecht bezüglich der Flachseite des Substrates ausgerichtete magnetische Vorzugsachse aufweist. Ein derartiges Verfahren zur Herstellung eines Aufzeichnungsmediums geht z.B. aus der EP-A-0 125 881 hervor.

Amorphe, auch als "metallische Gläser" oder "glasartige Metalle" bezeichnete Materialien sind allgemein bekannt (vgl. z.B. "Zeitschrift für Metallkunde", Band 69, 1978, Heft 4, Seiten 212 bis 220 oder "Elektrotechnik und Maschinenbau", 97. Jahrgang, September 1980, Heft 9, Seiten 378 bis 385). Bei diesen Materialien handelt es sich im allgemeinen um spezielle Legierungen, die aus mindestens zwei vorbestimmten, auch als Ausgangskomponenten bezeichneten Ausgangselementen oder -legierungen oder -verbindungen mittels besonderer Verfahren herzustellen sind. Diese speziellen Legierungen weisen anstelle eines kristallinen ein glasartiges, amorphes Gefüge auf und besitzen eine Reihe von außergewöhnlichen Eigenschaften bzw. Eigenschaftskombinationen wie z.B. hohe Verschleiß-oder Korrosionsbeständigkeit, große Härte und Zugfestigkeit bei gleichzeitig guter Duktilität sowie besondere magnetische Eigenschaften.

Auch für Speicherschichten wie z.B. für das aus der eingangs genannten EP-A bekannte magnetooptische Aufzeichnungsmedium werden vorzugsweise filmartige Schichten aus amorphen magnetischen Legierungen verwendet. Diese Schichten werden bisher im allgemeinen durch Aufdampfen oder durch Aufsputtern der entsprechenden Legierungen auf ein nicht-magnetisches Substrat hergestellt. Sie sollen dabei eine magnetische Vorzugsrichtung in einer senkrecht zu der jeweiligen Schichtoberfläche verlaufenden Richtung aufweisen.

Die Speicherung von Informationen in diese filmartigen Speicherschichten erfolgt üblicherweise durch deren punktuelle Erhitzung bis zu einer über der Curie-Temperatur oder magnetischen Kompensationstemperatur der filmartigen Schicht liegenden Temperatur. Auf diese Weise kann in der Schicht an einer gewünschten Position ein magnetischer Bereich mit umgekehrter Polarität gebildet werden. Die gespeicherten Informationen lassen sich dann unter Verwendung des magnetischen Kerr-Effektes auslesen, indem linear polarisiertes Licht auf die filmartige Speicherschicht gerichtet oder von dieser reflektiert wird. Die Polarisationsebene wird dabei in Abhängigkeit von der Richtung der jeweiligen Magnetisierung gedreht.

Für ein effektives Beschreiben und Auslesen mit einem verhältnismäßig hohen Rauschabstand (Signal-zu-Rausch-Verhältnis) von Informationen in bzw. aus solchen magnetischen Speicherschichten, die eine uniaxiale, senkrechte magnetische Anisotropie aufweisen, ergeben sich unter anderem die folgenden beiden Probleme:

1. Die Blochwände müssen in dem amorphen Material gut verankert werden; hierzu sind Pinning-Zentren notwendig.

2. Die gewünschte Zusammensetzung der amorphen Legierung muß dabei sehr homogen und genau kontrollierbar sein.

Das aus der genannten EP-A zu entnehmende Verfahren gibt hierzu keine Auskunft.

Auch bei Aufzeichnungsmedien, deren magnetische Speicherschicht mit uniaxialer, magnetischer Anisotropie von einem Magnetkopf zu beschreiben und optisch mit Hilfe von magnetooptischen Effekten auszulesen ist (vgl. z.B. DE-A-31 40 531), stellen sich entsprechende Probleme.

Aufgabe der vorliegenden Erfindung ist es deshalb, ein Verfahren zur Herstellung magnetooptischer Schichten für ein Aufzeichnungsmedium zu -schaffen, bei dem die erwähnten Probleme im wesentlichen gelöst sind und das somit ein verhältnismäßig großes Signal-Rausch-Verhältnis aufweist.

Ausgehend von dem eingangs genannten Verfahren wird diese Aufgabe erfindungsgemäß dadurch gelöst, daß ein Vorprodukt mit sandwichartigem Aufbau aus jeweils benachbarten Schichten aus den eine schnelle (anomale) Diffusionsreaktion zulassenden Ausgangskomponenten erstellt wird, wobei eine jeweilige Schichtdicke zumindest der schnell-diffundierenden Ausgangskomponente zwischen 1 und 100 nm vorgesehen wird, und daß anschließend zur Bildung eines amorphen Gefüges die Diffusionsreaktion bei einer vorbestimmten Temperatur unterhalb der Kristallisationstemperatur des amorphen Materials durchgeführt wird.

Die Bildung eines amorphen Gefüges durch eine spezielle Festkörperreaktion ist an sich bekannt (vgl. z.B. WO-A-84/02926). Hierzu muß eine der Ausgangskomponenten in die andere unterhalb der Kristallisationstemperatur des zu erzeugenden metallischen Glases schnell diffundieren, wobei diese andere Komponente praktisch unbeweglich bleibt. Eine derartige Diffusionsreaktion wird im allgemeinen auch als anomale, schnelle Diffusion bezeichnet. Hierbei sind bestimmte energetische Voraussetzungen zu erfüllen (vgl. z.B. "Physical Review Letters", Vol. 51, No. 5, August 1983, Seiten 415 bis 418 oder "Journal of Non-Crystalline Solids", Vol. 61 und 62, 1984, Seiten 817 bis 822). So müssen z.B. die Ausgangskomponenten der herzustellenden amorphen Legierung exotherm miteinander reagieren. Ferner wird auch eine bestimmte Mikrostruktur benötigt, indem die beteiligten Ausgangskomponenten eng benachbart sind. Dementsprechend sind insbesondere Schichtstrukturen geeignet (vgl. z.B. die genannte Literaturstelle aus "Phys.Rev.Lett.", Vol. 51). Daneben ist hierfür auch eine Schichtung von dünnen Metallfolien möglich (vgl. z.B. "Proc. MRS Europe Meeting on Amorphous Metals and Non-Equilibrium Processing". Hrsg.: M. von Allmen, Strasbourg, 1984, Seiten 135 bis 140).

Die Erfindung basiert nun auf der überraschenden Erkenntnis, daß sich mit dem aus der genannten Literaturstelle "Phys. Rev.Lett.", Vol. 51, an sich bekannten Verfahren Speicherschichten mit uniaxialer, magnetischer Anisotropie herstellen lassen. wie sie für magnetooptische Aufzeichnungsmedien besonders vorteilhaft sind. Es wurde nämlich erkannt. daß mit diesem Verfahren eine Einstellung der genauen Konzentration der einzelnen Komponenten leicht kontrollierbar durchzuführen ist. Außerdem bilden sich bei der Festkörperreaktion aufgrund einer im allgemeinen bei entsprechenden Systemen auftretenden anomalen Diffusion eine Vielzahl von Löchern an den Stellen, an denen sich zuvor die Schichten mit den schnell-diffundierenden Komponenten befunden haben. Derartige Löcher werden auch als Kirkendall-Löcher bezeichnet (vgl. die genannte Literaturstelle "Proc. MRS. Europe Meeting, 1984").

Radius $r_{KV}$ und Dichte $\rho_{KV}$ der sich bildenden Kirkendall-Löcher können durch die Reaktionsbedingungen, d.h. mittels der Parameter "Temperatur" und "Zeit", aber auch durch die ursprüngliche Schichtdicke $\Delta_i$ der schnell-diffundierenden Ausgangs komponente der zu bildenden amorphen Legierung eingestellt werden. Die Schichtdicke $\Delta_i$ wird dabei vorteilhaft zwischen 1 nm und 100 nm, vorzugsweise zwischen 2 nm und 50 nm, insbesondere zwischen 5 nm und 25 nm gewählt. Dabei ist die folgenden Beziehung einzuhalten: $2 r_{KV} < \Delta_i$. Um ein optimales Pinning der Blochwände zu erzielen, sollte die Größe der Kirkendall-Löcher in etwa der Blochwanddicke $\delta_{BW}$ entsprechen, d.h. $2 r_{KV}$ ungefähr gleich $\delta_{BW}$ sein. Der besondere Vorteil des erfindungsgemäßen Verfahrens liegt somit in der guten Steuerbarkeit der Pinning-Zentren.

Besonders vorteilhaft ist es, wenn die Ausgangskomponenten der zu bildenden amorphen Legierung während der schnellen Diffusionsreaktion einem magnetischen Gleichfeld ausgesetzt werden. Mit Hilfe eines solchen angelegten Magnetfeldes läßt sich nämlich eine Beeinflussung der Atomanordnung in der Legierung und damit der magnetischen Anisotropie noch weiter verbessern.

Weitere vorteilhafte Ausgestaltungen des erfindungsgemäßen Verfahrens gehen aus den übrigen Unteransprüchen hervor.

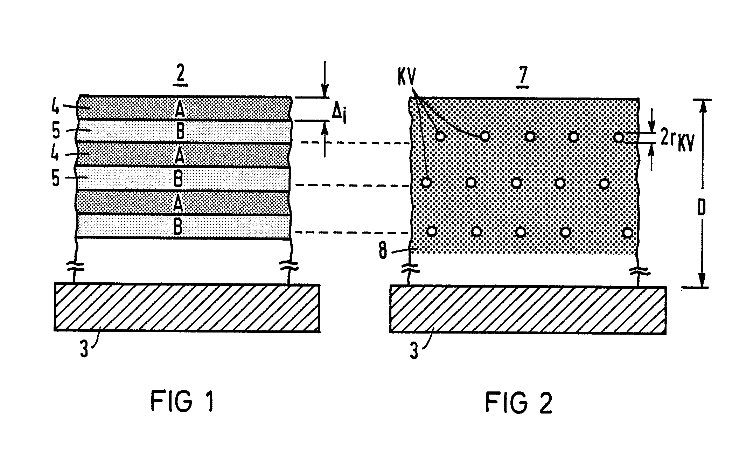

Zur weiteren Erläuterung der Erfindung wird nachfolgend auf die Zeichnung Bezug genommen, in deren Figuren 1 und 2 schematisch zwei Schritte zur Ausbildung eines magnetooptischen Aufzeichnungsmediums mit dem erfindungsgemäßen Verfahren angedeutet sind.

Um gemäß der Erfindung ein magnetooptisches Aufzeichnungsmedium zu erhalten, wird zunächst ein Vorprodukt erstellt. dessen sandwichartiger Aufbau in Figur 1 als Querschnitt veranschaulicht ist. Dieses allgemein mit 2 bezeichnete Vorprodukt weist ein an sich bekanntes, nichtmagnetisches Substrat 3 auf, auf welchem eine Multischichtstruktur aus den Ausgangskomponenten einer mittels einer Festkörperreaktion zu bildenden magnetischen amorphen Legierung mit senkrechter magnetischer Anisotropie aufgebracht ist. Gemäß dem dargestellten Ausführungsbeispiel besteht die Multischichtstruktur aus einer Vielzahl von jeweils zwei alternierenden Schichten 4 und 5, die periodisch wiederkehrend auf dem Substrat 3 insbesondere in Aufdampf-oder Sputtertechnik abgeschieden sind. Die Schichten 4 sollen dabei jeweils aus einer Ausgangskomponente A bestehen. während die Schichten 5 aus einer Ausgangskomponente B gebildet sind. Beide Materialien dieser Komponenten sind dabei so gewählt, daß in einer an sich bekannten schnellen (anomalen) Diffusionsreaktion die gewünschte amorphe Legierung auszubilden ist. Dabei soll es sich bei der Ausgangskomponente A um das gegenüber der Ausgangskomponente B vergleichsweise schlechter diffundierende Material handeln; d.h. die Ausgangskomponente B ist ein schnell-diffundierendes Material. Beide Komponenten können entweder in elementarer Form oder in Form einer Legierung oder Verbindung vorgesehen werden. Dabei wird als Material für die Komponente A ein schweres Übergangsmetall wie z.B. ein 4d-, 5d-, 4f-oder 5f-Element, insbesondere Seltene Erden wie z.B. Tb, Gd, Dy, oder Nd gewählt. Auch Kombinationen solcher Elemente wie z.B. Gd-Ty, Tb-Nd oder Pt-Sb sind verwendbar. Als schnell-diffundierende Ausgangskomponente B sind 3d-Übergangsmetalle wie Fe, Co, Ni, Mn oder Cr oder mehrkomponentige Kombinationen hieraus wie z.B. Fe-Co, Fe-Mn oder Ni-Fe-Cr vorzusehen. Statt der im Ausführungsbeispiel gemäß Figur 1 angenommenen jeweils zwei alternierenden Schichten 4 und 5 kann man auf dem Substrat 3 gegebenenfalls auch jeweils drei alternierende Schichten abscheiden. So ist z.B. statt der dargestellten Multischichtstruktur (AB)(AB)(A...) auch eine Schichtstruktur (B₁AB₂)(B· AB₂)(B· ...) möglich. Dabei sollten die einzelnen Schichten, zumindest aber die Schichten der - schnell-diffundierenden Ausgangskomponente B bzw. der Komponenten B· und B₂, jeweils ursprüngliche Schichtdicken $\Delta_i$ aufweisen, die zwischen 1 nm und 100 nm, vorzugsweise zwischen 2 nm und 50 nm, insbesondere zwischen 5 nm und 25 nm liegen.

Nach Aufbau des Vorproduktes 2 mit den vorbestimmten Schichtdicken aus den Ausgangskomponenten erfolgt anschließend die Amorphisierung durch eine geeignete Temperaturbehandlung unter Ausnutzung der anomalen, schnellen Diffusion in bekannter Weise (vgl. die genannten Literaturstellen "Phys.Rev. Lett." oder "J.Non-Cryst.Sol."). Hierbei ist zu beachten, daß je feiner das Gefüge ist, desto niedrigere Temperaturen oder desto kürzere Glühzeiten für die vollständige Umwandlung in eine homogene Legierung des gewünschten amorphen Materials ausreichen. Die Glühtemperatur muß dabei auf jeden Fall in bekannter Weise unterhalb der Kristallisationstemperatur des metallischen Glases liegen. Die Glühzeiten betragen im allgemeinen etwa 0,5 bis 10 Stunden.

Läßt man die Festkörperreaktion in einem äußeren Magnetfeld ablaufen, um so die magnetische Anisotropie des amorphen Materials zu beeinflussen, so sollte die Reaktionstemperatur $T_R$ kleiner als die Curie-Temperatur $T_c$ sein. Die Stärke des Magnetfeldes sollte dabei mindestens 0,05 T betragen, wobei die Wirkung mit steigender Feldstärke zunimmt. Für hohe Feldstärken bis etwa 15 T kann vorteilhaft ein supraleitender Magnet eingesetzt werden.

In Figur 2 ist schematisch der nach der Festkörperreaktion aus dem Vorprodukt 2 gemäß Figur 1 hervorgegangene, allgemein mit 7 bezeichnete Körper als Querschnitt veranschaulicht. Dieser Körper enthält dann eine magnetooptische Speicherschicht 8 auf dem Substrat 3 mit einer Dicke D von ungefähr 200 bis 1000 nm. Wie in der Figur besonders ausgeführt ist, bilden sich bei der Festkörperreaktion vorteilhaft Kirkendall-Löcher KV aus, deren Radius $r_{KV}$ und Dichte $\rho_{KV}$ von den Reaktionsbedingungen und der ursprünglichen Schichtdicke $\Delta_i$ der schnell-diffundierenden Ausgangskomponente bzw. den Komponenten abhängt. Der Durchmesser dieser Kirkendall-Löcher ist dabei höchstens so groß wie die ursprüngliche Schichtdicke $\Delta_i$.

Gemäß einem konkreten Ausführungsbeispiel zur Ausbildung einer magnetooptischen Speicherschicht der Zusammensetzung Tb(20at%)Fe-(80at%) wird ein Vorprodukt 2 mit einer Multischichtstruktur der Gesamtdicke D von ungefähr 126 nm aufgebaut. Dabei sind als Ausgangskomponenten A zehn Schichten Tb mit jeweiliger Dicke $\Delta_i$ (Tb) = 5 nm und als Komponente B zehn Schichten Fe der jeweiligen Dicke $\Delta_i$(Fe) = 7,6 nm vorgesehen. Mit den bekannten atomaren Dichten $\rho_a^{Tb}$ = 3,22 $\times$ 10²² cm⁻³ und $\rho_a^{Fe}$ = 8,5 $\times$ 10²² cm⁻³ ergibt sich bei dieser Schichtung die gewünschte Zusammensetzung. Für die erfindungsgemäße Festkörperreaktion wird dann der Schichtaufbau mit der genannten Zusammensetzung einige Stunden lang bei Temperaturen zwischen 100°C und 300°C geglüht. Der Durchmesser 2 . $r_{KV}$ der dabei entstehenden Kirkendall-Löcher KV liegt dabei unter 7,6 nm. Die so hergestellte Speicherschicht weist ein um mehrere Dezibel höheres Signal-zu-Rausch-Verhältnis auf als eine entsprechend dicke Schicht aus demselben Material, das auf dem Substrat bereits als Legierung abgeschieden wird.

## Ansprüche

1. Verfahren zur Herstellung eines magnetooptischen Aufzeichnungsmediums, bei welchem auf wenigstens eine Flachseite eines nicht-magnetischen Substrates eine Speicherschicht aus einem magnetischen amorphen Material aufgebracht wird, das aus mindestens zwei Ausgangskomponenten in elementarer Form oder in Form von Verbindungen oder Legierungen gebildet wird und eine senkrecht bezüglich der Flachseite des Substrates ausgerichtete magnetische Vorzugsachse aufweist, **dadurch gekennzeichnet**, daß ein Vorprodukt (2) mit sandwichartigem Aufbau aus jeweils benachbarten Schichten (4, 5) aus den eine schnelle (anomale) Diffusionsreaktion zulassenden Ausgangskomponenten (A, B) erstellt wird, wobei eine jeweilige Schichtdicke ($\Delta_i$) zumindest der - schnell-diffundierenden Ausgangskomponente (B) zwischen 1 nm und 100 nm vorgesehen wird, und daß anschließend zur Bildung eines amorphen Gefüges die Diffusionsreaktion bei einer vorbestimmten Temperatur unterhalb der Kristallisationstemperatur des amorphen Materials durchgeführt wird.

2. Verfahren nach Anspruch 1, **dadurch gekennzeichnet**, daß eine Schichtdicke ($\Delta_i$) zumindest der schnell-diffundierenden Ausgangskomponente (B) zwischen 2 nm und 50 nm, vorzugsweise zwischen 5 nm und 25 nm vorgesehen wird.

3. Verfahren nach Anspruch 1 oder 2. **dadurch gekennzeichnet,** daß das Vorprodukt (2) während der schnellen (anomalen) Diffusionsreaktion einem magnetischen Gleichfeld ausgesetzt wird.

4. Verfahren nach Anspruch 3. **dadurch gekennzeichnet,** daß die Diffusionsreaktion bei einer Temperatur unterhalb der Curie-Temperatur des amorphen Materials durchgeführt wird.

5. Verfahren nach einem der Ansprüche 1 bis 4, **dadurch gekennzeichnet,** daß als schnell-diffundierende Ausgangskomponente (B) ein 3d-Übergangsmetall oder eine Legierung oder Verbindung mit einem solchen Metall vorgesehen wird.

6. Verfahren nach einem der Ansprüche 1 bis 5. **dadurch gekennzeichnet,** daß als schlecht-diffundierende Ausgangskomponente (A) ein - schweres Übergangsmetall, insbesondere eine Seltene Erde. oder eine Legierung oder Verbindung mit einem solchen Element vorgesehen wird.

7. Verfahren nach einem der Ansprüche 1 bis 6. **dadurch gekennzeichnet,** daß die Schichten aus den Ausgangskomponenten (A, B) auf das Substrat (3) durch Aufdampfen oder durch Aufsputtern abgeschieden werden.

FIG 1

FIG 2